# EUROPEAN PATENT SPECIFICATION

(11) **EP 3 848 595 B1**
(45) Date of publication and mention of the grant of the patent: **26.07.2023**
(21) Application number: 20217360.5
(22) Date of filing: 28.12.2020
(51) Int. Cl.: F16B 19/10, B25B 31/00

(54) **FASTENER ASSEMBLY AND METHOD FOR OPERATION OF SAID ASSEMBLY**
BEFESTIGUNGSANORDNUNG UND VERFAHREN ZUM BETRIEB DER BESAGTEN ANORDNUNG
ENSEMBLE ÉLÉMENT DE FIXATION ET PROCÉDÉ DE FONCTIONNEMENT DUDIT ENSEMBLE

(30) Priority: 07.01.2020 US 202062958181 P
(43) Date of publication of application: 14.07.2021
(73) Proprietor: Centrix Inc., Kent, WA 98032-3913 (US)
(72) Inventor: McClure, Travis, Kirkland, WA 98033 (US)
(74) Representative: DTS Patent- und Rechtsanwälte Schnekenbühl und Partner mbB

(56) References cited:
- EP-A1- 0 198 105
- FR-A1- 3 019 078

## Description

### FIELD

The present description relates generally to a fastener assembly designed to clamp a workpiece.

### BACKGROUND AND SUMMARY

Many manufacturing fields use fasteners, such as blind fasteners, for securing two objects to one another when only one side of a joint is accessible. Styles of blind fasteners having splitter bars that drive expansion of the clamping legs have been utilized in various industries to allow for rapid workpiece clamping/unclamping. The splitter bars in previous fasteners are machined as a single piece and interact with machined legs during clamping/unclamping action. In this style of fastener, the clamping legs interact with the splitter bar to axially expand the legs during clamping and axial retract the legs when unclamping the fastener. For instance, clamping legs in splitter bar fasteners (e.g., cleko style fasteners) designed to contract and expand are employed in the aerospace industry and other manufacturing applications (e.g., automotive manufacturing) to temporarily secure metal structures in place during tooling. EP 0 198 105 A1 discloses a positive-release, wire-pin type clamp for use with automated insertion and withdrawal tool.

The inventors have recognized several drawbacks with previous splitter bar style fasteners. For instance, the fastener's clamping legs may be susceptible to degradation during fastener clamping. For example, the clamping legs may be adjacent to workpiece apertures during clamping. Consequently, the legs may experience unwanted loading if the workpieces shift positions. The clamping legs, however, may be ill equipped to carry certain types of stresses, such as shear and bending stresses. For instance, in previous fasteners each leg acts as an independent element when experiencing shear and bending stresses. To elaborate, each of the independent legs can slide back and forth when the fastener is in use. As such, the legs do not cooperatively interact, when experience shear and bending stresses and therefore are not able to withstand loads occurring in certain operating environments. The clamping legs, therefore, may become damaged and/or may be difficult to remove in certain circumstances. Furthermore, the clamping legs may also be susceptible to damage during insertion and removal of the fastener through the workpieces. For example, the clamping legs may become hung-up on workpiece openings, increasing fastener insertion and removal difficulty as well as potentially causing abrasive wear to the legs and/or workpiece.

Facing the aforementioned challenges, the inventors developed a fastener assembly to at least partially overcome the challenges. The problem was solved by a fastener assembly according to claim 1. Independent claim 13 defines a method for operating a fastener assembly. Advantageous betterments are defined in the dependent claims. The fastener assembly includes a clamping unit having two clamping legs each having a shank and a clamping foot extending therefrom and a splitter bar including extensions and a shaft extending between the two clamping legs. The splitter bar radially expands and retracts the clamping feet responsive to axially translation of the clamping unit. The fastener assembly further includes a protective sleeve partially circumferentially surrounding at least a portion of the clamping leg shanks and the splitter bar. The protective sleeve comprises slots having the extensions extending there through. In one example, the sleeve may include two slots with two extensions of the splitter bar extending therethrough. Further, in one example, the splitter bar may include two anchors at either end extending across the slots. However, embodiments with other combinations of slots, extensions, and/or anchors, have been envisioned. The protective sleeve increases the fastener's structural integrity (e.g., significantly increases the fastener's ability to carry shear and bending loads), thereby increasing the durability of the fastener. To elaborate, the sleeve works in unison with other components in the fastener to increase the amount of bending and shear stresses that can be carried by the fastener during use. Additionally, the protective sleeve guards the legs and splitter bar from damage during fastener insertion and removal. For instance, the sleeve reduces the likelihood of the fastener's clamping legs hanging up on workpiece openings during fastener insertion and removal because the sleeve reduces the chance (e.g., prevents) the legs will bend outward beyond a desired threshold. The protective sleeve also improves fastener alignment during insertion and removal of the fastener.

In one example, the protective sleeve may further include a first reinforcement section extending across an upper end of each of the slots and a second reinforcement section extending across a lower end of each of the slots. The reinforcement sections further increase the fastener's ability to manage shear and bending stresses to further increase fastener durability.

In another example, an axial length of the splitter bar is less than an axial length of the slots of the protective sleeve. In this way, the splitter bar may be efficiently mated with the protective sleeve during fastener assembly. For example, the splitter bar may be slid through the slots into a gap between the clamping legs during fastener assembly.

In yet another example, when the fastener assembly is transitioned from the unclamped configuration to the clamping configuration, the slots in the sleeve axially translate with regard to the two extensions in the splitter bar. Consequently, the protective sleeve shifts to accommodate for movement of the clamping unit during workpiece clamping, resulting in increased clamping unit protection.

It should be understood that the summary above is provided to introduce in simplified form a selection of concepts that are further described in the detailed description. It is not meant to identify key or essential features of the claimed subject matter, the scope of which is defined uniquely by the claims that follow the detailed description. Furthermore, the claimed subject matter is not limited to implementations that solve any disadvantages noted above or in any part of this disclosure.

### BRIEF DESCRIPTION OF THE DRAWINGS

FIG. 1 shows an assembled view of a fastener assembly.
FIG. 2 shows an exploded view of a portion of the fastener assembly, illustrated in FIG. 1, including a protective sleeve, splitter bar, and clamping unit.
FIG. 3 shows a partially disassembled view of the fastener assembly with the clamping unit in an unclamped configuration.
FIG. 4 shows the fastener assembly in a partially disassembled state with the clamping unit in a clamped configuration.
FIG. 5 shows an assembled view of the fastener assembly, shown in FIG. 1, in a clamping configuration.
FIG. 6 shows an assembled view of the fastener assembly, shown in FIG. 1, in another clamped configuration.
FIG. 7 shows a detailed view of the protective sleeve and an optional spring in the fastener assembly, shown in FIG. 1.
FIG. 8 shows another embodiment of a fastener.
FIGS. 9-10 show yet another embodiment of a fastener.
FIG. 11 shows a method for installing and removing a fastener assembly from workpieces.

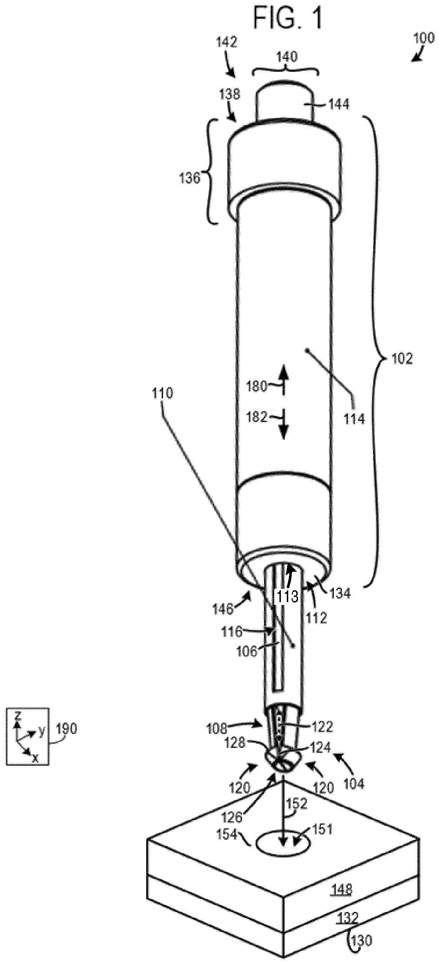

FIGS. 1-10 are drawn approximately to scale. However, other relative dimensions may be used, in other embodiments.

### DETAILED DESCRIPTION

Previous splitter bar style fasteners have not been able to manage elevated stresses in certain installation scenarios. To elaborate, legs, splitter bars, and other components in previous splitter bar style fasteners are not designed to cooperatively interact to increase the fastener's structural integrity. For example, each component may flex during use and does not reinforce adjacent components by a desired amount. Designing the fastener's components in this manner therefore significantly impacts the fastener's ability to carry shear and bending stresses. Consequently, previous splitter bar style fasteners may not be able to meet structural design goals in certain end-use environments. A useful analogy highlighting the drawbacks of previous fastener designs may be to picture cleko style fastener components as stacked pages in a book. In tension, the pages act together to react axial loading. However, when experiencing shear and bending moments, the pages slide back and forth with regard to one another. Therefore, previous fasteners may not be designed to carry a desired amount of shear and bending loads.

The following description relates to a fastener assembly with a protective sleeve guarding clamping legs against degradation during tooling and increasing the fastener's ability to carry increased stresses (e.g., shear and bending stresses). The sleeve circumferentially surrounds clamping legs and a splitter bar causing leg actuation during clamp-up. In this way, the internal components are protected from abrasive wear during removal/insertion of the fastener to/from workpieces and also protected from external loading when the fastener is clamped-up. The sleeve, legs, and splitter bar may be retained in a cavity of a body at their upper ends by way of a lip at the body's upper end. The fastener may also include a drive mechanism generating axially translation of the clamping legs during clamping/unclamping action. During fastener clamping, the drive mechanism (e.g., external drive nut) draws the clamping legs up into the body while the splitter bar remains substantially stationary. The splitter bar pushes the legs radially outward. When radially expanded, the feet of the clamping legs act as a lower clamping surface and a face of the body acts as an upper clamping surface when the fastener is clamping workpieces. As the clamping legs are drawn up into the body, the sleeve shields the clamping legs, thereby protecting the legs from abrasive wear. During fastener clamping operation, the sleeve also allows unwanted workpiece loading (e.g., shear loading) to be transferred away (e.g., substantially decoupled) from the clamping legs and placed onto a more robust component (i.e., the sleeve). To elaborate, the sleeve includes slots allowing portions of the splitter bar to extend therethrough. The sleeve may also have unslotted portions at either end. The unslotted portions allow the sleeve to act as a combined unit exhibiting increased strength and ability to carry bending and shear loads due to the sleeve's increased moment of inertia. The clamping legs can then carry clamping loads while being substantially decoupled from shear loading. In this way, the load path in the fastener is tuned to increase the fastener's resiliency, durability, etc. The sleeve also may serve to align the clamping feet in a more desirable orientation. The sleeve in the fastener also improves the removal of the fastener. For instance, the clamping stack may shift during use of the fastener. The sleeve reduces the shifting of the stack, reducing the likelihood (e.g., preventing) the clamping legs from becoming hung up on one of the workpiece that has shifted in the stack. Thus, the clamping feet may be less susceptible to shifting out of a desired angular alignment during clamping. Consequently, during clamping action the fastener may be less vulnerable to adverse effects of workpiece loading and improve the fastener's alignment. The aforementioned benefits work in conjunction to increase fastener reliability, allowing the fastener's lifespan to be increased. Furthermore, the diametrical tolerances of a one-piece sleeve may be held much tighter, if desired, than previous fasteners with three-piece splitter bar arrangements and can therefore provide better alignment across a variety of usage scenarios.

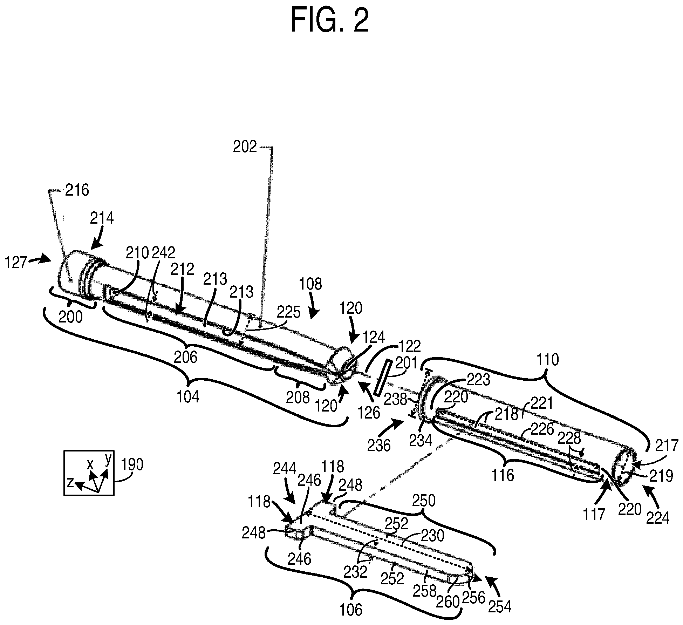

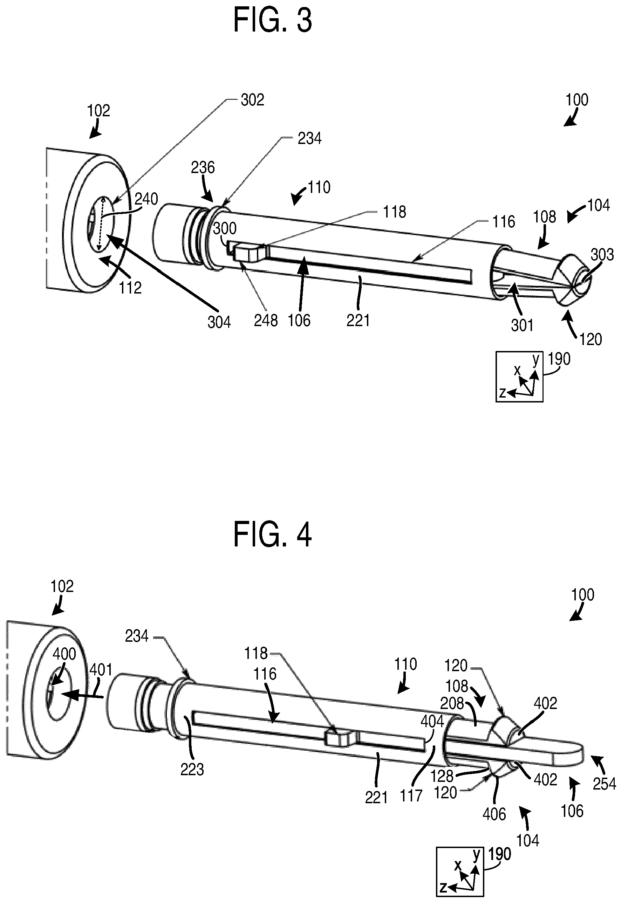

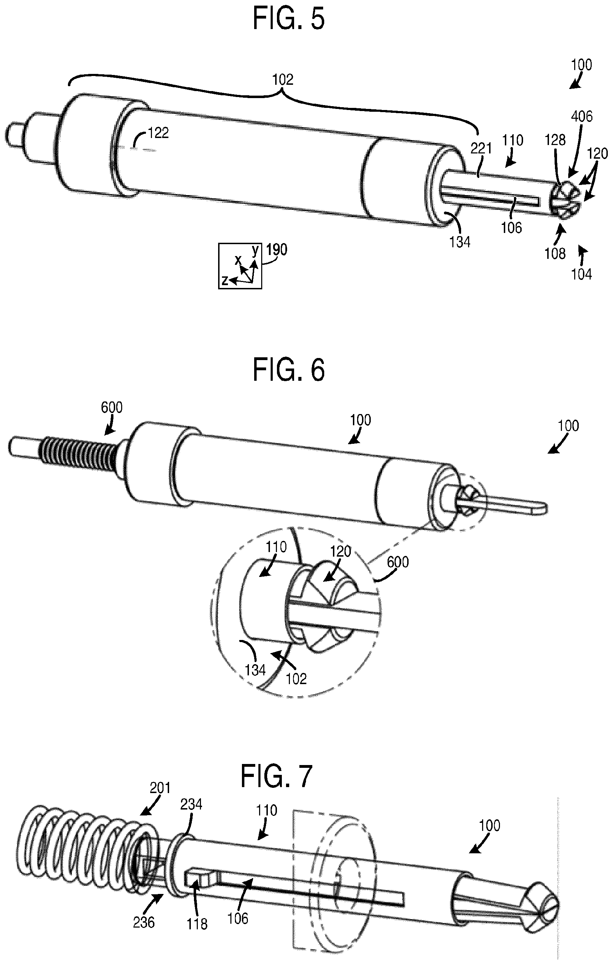

FIG. 1 shows an assembled view of the fastener assembly. FIG. 2 shows an exploded view of a clamping unit, splitter bar, and protective sleeve in the fastener. FIG. 3 illustrates the fastener in a partially disassembled view where the clamping unit is in an unclamped configuration. FIG. 4 depicts the fastener in the partially disassembled view embodied in FIG. 3, in a clamping configuration. FIG. 5 shows the fastener assembled in a clamping configuration. FIG. 6 illustrates a method for clamping and unclamping the fastener assembly.

A fastener assembly 100 (e.g., removable fastener assembly) is depicted in FIG. 1. The fastener assembly 100 includes a body 102 housing portions of a clamping unit 104, a splitter bar 106 positioned between clamping legs 108 in the clamping unit 104, and a protective sleeve 110. Thus, the body 102 at least partially circumferentially encloses portions of the clamping unit 104, splitter bar 106, and protective sleeve 110. To elaborate, a lip 112 at a first end (e.g., lower end) of the body 102 allows the clamping unit 104, splitter bar 106, and protective sleeve 110 to be axially retained in the body. In this way, the fastener may remain as a cohesive unit during insertion and removal of the fastener. As a result, the fastener's installation process is made more efficient and the chance of misplacing, loosing, etc., fastener parts is reduced. The body 102 also includes an opening 113 allowing a portion of the sleeve 110 to extend therethrough.

The fastener components are described herein with regard to upper and lower ends, sides, etc., to provide a recognizable descriptive framework. An upper end refers to an outer section with regard to a first axial direction 180 and a lower end refers to an outer section with regard to a second axial direction 182 opposing the first axial direction. However, it will be understood that the fastener may not be aligned with a gravitational axis, in certain circumstances. Thus, numerous angular alignments of the fastener during installation, clamping, etc., are possible.

The body 102 includes an outer surface 114. In the illustrated example, the outer surface 114 has a cylindrical shape. However, in other examples, at least a portion of the outer surface 114 may have another suitable shape such as a polygonal shape allowing the body to interface with a tooling device (e.g., wrench, driver bits, etc.)

The protective sleeve 110 includes two slots 116. "T" shaped extensions 118, shown in FIG. 2, extend through the slots 116 of the protective sleeve 110. Although the extensions 118 have a "T" style shape in the illustrated example, other suitable orientations and/or shapes of the extensions may be used, in other embodiments.

Continuing with FIG. 1, the protective sleeve 110 also includes a lower reinforcement section 117 extending across lower ends of the slots 116. The lower reinforcement section 117 circumferentially surrounds a central axis 122 of the fastener assembly 100. The reinforcement section 117 increases the structural integrity of the sleeve and specifically increases the fastener's ability to withstand bending and shear loads when the fastener is in use. Consequently, the chance of fastener degradation caused by loading during use is decreased. To elaborate, the sleeve may allow bending and shear loading to be substantially decoupled from the clamping legs 108. Decoupling the bending and shear from the legs facilitates a free body state in which the legs carry clamping loads (e.g., carry only clamping loads), a desirable arrangement for this type of fastener. The protective sleeve may also improve removal of the fastener especially when one or more parts in the stack to be clamped have shifted, as the shifted members tend to shift as much as the legs allow and thus in previous fasteners the shifted workpieces come to rest on the leg and "hang up" on the clamping feet. The sleeve reduces the chance of (e.g., prevents) the clamping feet from becoming "hung-up" as the shifted part only shifts until it hits the sleeve which is a relatively small amount. Furthermore, the increased stiffness of the sleeve (when compared to previous fasteners) creates better alignment. Additionally, the diametrical tolerances of a single piece sleeve can be held much tighter than the traditional three pieces leg/splitter bar arrangements and can thus provide better alignment across a wide range of scenarios, if desired.

Additionally, in one example, the extensions 118, shown in FIG. 2, in the splitter bar 106 may be fixedly attached to an interior surface of the lip 112 or inside the body 102. In this way, the splitter bar may be held substantially stationary while the clamping unit is axially translated into a clamping configuration and an unclamped configuration. However, in other examples, the extensions 118 in the splitter bar 106 may be seated in recesses in the body and coupled (e.g., press fit, welded, etc.,) to a side of the body 102.

The fastener assembly 100 in FIG. 1 is in an unclamped configuration where clamping feet 120 in the clamping legs 108 extend inwardly towards the central axis 122 of the fastener. Specifically, in the illustrated example, interior surfaces 124 of the clamping feet 120 contact one another. However, other clamping feet positions in the unclamped configuration may be used, such as an arrangement where the interior surfaces are spaced apart.

It will be understood that the clamping legs 108 are flexible. The material used to form the legs as well as the profile of the legs may dictate the amount of flexion of the legs. For instance, the legs may have a radially converging profile (e.g., tapered profile) in a direction extending toward the lower end 126 of the clamping unit 104. However, numerous suitable leg profiles have been contemplated. The feet 120 include a clamping surface 128 that contact an outer surface 130 of a lower workpiece 132 when the fastener is in a clamping configuration. On the other hand, a face 134 of the body 102 functions as the upper clamping surface in the clamped configuration. Thus, when the fastener is in a clamping configuration the face 134 contacts the surface 154 in the upper workpiece 148. In the illustrated example, the face 134 is radially aligned. However, in other instances, the face 134 may have another suitable profile such as a tapered profile. In such an example, the workpiece aperture may be correspondingly shaped to allow the face to contact the upper workpiece.

The body 102 includes a cap 136 at an upper end 138. A drive mechanism 140 is positioned at the upper end 142 of the fastener assembly 100. The drive mechanism 140 functions to axially translate the clamping unit 104 when transitioning the fastener from the clamping configuration to the unclamping configuration or vice versa. The drive mechanism 140 may include a drive element 144 (e.g., drive nut) threading into the body 102. In such an example, the drive element 144 may include a tooling interface (e.g., polygonal head, polygonal recess, slotted recess, etc.,) designed to mate or otherwise receive a tool designed to rotate the drive element 144 in two opposing rotational direction. It will be understood that rotation of the drive element 144 in the first rotational direction causes axial translation of a threaded rod coupled to the drive nut downward toward the lower end 146 of the body 102. The threaded rod may be coupled to an internal nut element or nut cage of the clamping unit such that the clamping unit axial translates upwards and downwards responsive to axial movement of the rod. The nut cage is described in greater detail herein. Therefore, axial translation of the threaded rod toward the lower end 146 of the body 102 moves the clamping unit downward and therefore transitions the legs in the clamping unit into an unclamped configuration. On the other hand, rotation of the drive nut in the second rotation direction causes axial translation of the threaded rod upward away from the lower end 146 of the body 102. In turn, axial translation of the threaded rod moves the clamping unit 104 upward to place the clamping legs in the clamping configuration where they are radial expanded by the spreader bar. The drive element 144 (e.g., drive nut) and top portion of the body 102 may have a cooperating axial load carrying features in order to support the clamping forces (for the drive nut to axially react loads with and act as an anchor in which to "pull" the legs up and over the stationary splitter bar). The fastener may further include a spring positioned in the body and contacting the clamping unit. In such an example, the spring is compressed when the fastener is transitioned into a clamped configuration. Thus, the spring urges the clamping unit back to an unclamped configuration.

Additionally, the drive element 144 (e.g., drive nut) and a top portion of the body 102 may be designed to cooperatively carry axial loads to support clamping forces. To elaborate, the drive nut and upper body portion are configured to axially react loads and act as an axial anchor to pull the legs up and over the splitter bar.

An upper workpiece 148 and the lower workpiece 132 each including an aperture 150 are shown in FIG. 1. It will be understood that the fastener assembly 100 may be inserted through the workpiece apertures 150 in the unclamped configuration, indicated via arrow 152. The upper workpiece 148 includes an outer surface 154 that is clamped via an upper clamping surface in the fastener, which is the face 134 of the body 102, in the illustrated example. On the other hand, the lower workpiece 132 includes the outer surface 130 that is clamped via a lower clamping surface 128 in the fastener. The clamping action in the fastener is described in greater detail herein. The workpieces 132 and 148 may be included in a variety of components, systems, devices, etc., in a wide variety of fields including the aerospace industry, the construction industry, manufacturing industry, maritime industry, the automotive industry, etc. The workpieces may be constructed out of a variety of suitable materials such as metal (e.g., steel, aluminum, titanium, etc.,), composite materials, polymer materials, combinations therefore, etc. Additionally, the fastener may also be constructed out of numerous suitable materials or combinations of materials such as metal (e.g., steel, aluminum, titanium, etc.,), polymer materials, combinations thereof, etc. Moreover, the materials used to construct the different components in the fastener may be chosen based on end use requirements. It will be appreciated that for structural applications (e.g., large load bearing structures) the fastener may be constructed out of steel. On the other hand, when designed for commercial applications the fastener system may employ plastics. Further, in other examples, the fastener assembly may have a hybrid material construction where both plastic and metal are utilized.

An axis system 190 is shown in FIG. 1 as well as FIGS. 2-5 to establish a common frame of reference. In one example, the z-axis may be parallel to a gravitational axis, the x-axis may be a lateral axis, and the y-axis may be a longitudinal axis. However, other orientations of the axes may be used, in other examples. Additionally, the central axis 122 is provided in FIGS. 1- 5, when appropriate. Directions along the central axis may therefore be referred to as axial directions. It will also be understood that a radial direction refers to a direction extending from the central axis and arranged perpendicular to the central axis.

FIG. 2 shows an exploded view of the protective sleeve 110, the clamping unit 104, and the splitter bar 106. The clamping unit 104 is shown including a nut cage 200. In one example, the nut cage 200 includes a threaded interior portion (e.g., similar to a nut) and an exterior polygonal portion (e.g., hexagonal, octagonal, square, etc.) The exterior polygonal portion functions as an anti-rotation feature that can axially translate within an interior portion (e.g., interior polygonal, hexagonal, etc., portion) of the body 102, shown in FIG. 1. The nut cage 200 may also include a leg capturing structure. The leg capturing structure may allow each individual leg to be inexpensively stamped and then added to and trapped by the nut cage via a swaging and/or brazing operation, for instance. The nut cage therefore allows the clamping unit to axially translate within the body but rotation of the unit with regard to the body is substantially inhibited. The clamping unit 104 may also include a leg capturing feature allowing the clamping legs to be stamped or otherwise manufactured (e.g., machined, cast, etc.,) and then coupled (e.g., swaged, brazed, press fit, etc.,) to the nut cage. The leg capturing features allows the legs to be inexpensively incorporated into the clamping unit, if desired. As such, the clamping legs 108 are joined near the upper end. In this way, the relative position of the legs at one end may be substantially retained.

When the fastener is assembled, the internal nut cage 200 and clamping unit 104 are coupled to one another. Subsequently, protective sleeve 110 is mated with the clamping unit 104 and then the splitter bar 106 is anchored to the body 102. Thus, the protective sleeve 110 is bounded on one side by the nut cage and on the other side by the "T" extensions of the splitter bar. When in use, the nut cage 200 is pulled up into the body 102 to open the clamping legs 108 via the splitter bar 106. Once the legs are opened, the clamping feet 120 extend beyond the sleeve to serve as a clamping arm. The clamping feet 120 may also act to force the sleeve to axial move with the feet as they are axially pulled into the body. In one example, the protective sleeve 110 may remain substantially stationary when the clamping legs 108 are opened and then may travel with the clamping legs at the urging of the expanded clamping feet 120. However, in other examples, the flange 234 of the protective sleeve 110 may act as a landing for a compression spring, generically depicted at 201. The spring is shown in greater detail in FIG. 7. As such, the compression spring may sit between the nut cage 200 and the outer diameter 238 of the flange 234 and may be sized to urge the protective sleeve 110 towards the "T" shaped extensions 118 of the splitter bar 106. In such an example, the compression spring may travel with the protective sleeve 110 when the expanded clamping feet 120 are in contact with an end of the protective sleeve during clamping operation and urge the sleeve to travel in tandem with the clamping feet. Additionally, in one embodiment, the flange 234 may also cooperate with the lip 112 of the body 102, shown in FIG. 1, to limit the axial motion in a direction opposite of clamping. However, it will be understood that in other embodiments the flange 234 and/or compression spring 201 may be omitted from the fastener. In such an embodiment, the compression spring may push against the end of the sleeve and the end of the slots in the protective sleeve may push against the "T" shaped extensions 118 in the splitter bar 106.

The clamping unit 104 includes the clamping legs 108 divided into shanks 202 and feet 120 extending therefrom. The clamping legs 108 are positioned at the lower end 126 of the clamping unit 104. The upper end 127 of the clamping unit 104 is also indicated in FIG. 2. The shanks 202 can be conceptually divided into an upper section 206 where the clamping legs 108 run substantially parallel to one another and a lower section 208 where the clamping legs 108 radially converge towards one another in an unclamped configuration (e.g., neutral configuration). Specifically, in the illustrated example, interior surfaces 124 of the clamping feet 120 are in contact with one another. As previously, discussed the clamping legs 108 are flexible such that they bend outwardly during clamp-up. The profile and/or material construction of the lower section 208 of the clamping legs 108 may be selected to achieve a desired amount of leg flexion. For instance, the lower section 208 may have a tapered profile in a direction extending towards the clamping unit's lower end 126. In other examples, the lower section 208 of the clamping legs 108 may have a concave portion. However, numerous suitable clamping legs profiles may be used.

An upper interior surface 210 in the clamping unit 104 spans a gap 212 between the clamping legs 108. To elaborate, the gap 212 is positioned between interior surfaces 213 of the clamping legs 108. The upper interior surface 210 may axially delimit movement of the splitter bar 106. In another example, the clamping legs 108 may be formed as discrete legs and are captured by the nut in the form of a nut cage. However, fasteners with discrete legs may be less robust when compared to fasteners with the clamping unit forming a continuous shape.

An extension 214 projects from the nut cage 200. The extension 214 is sized to allow the clamping unit 104 to be retained in the body 102, shown in FIG. 1. The extension 214 also axially delimits movement of the protective sleeve 110. In this way, the fastener may remain as a cohesive unit during workpiece installation and removal. The extension 214 has a cylindrical shape, in the illustrated example. Thus, the extension 214 has a curved outer surface 216. However, other shapes of the extension 214 have been contemplated, such as polygonal shapes, oval shapes, etc.

The protective sleeve 110 includes the two slots 116 opening into a central cavity 217. The diameter 219 of the central cavity 217 is greater than a diameter 225 of upper section 206 of the clamping legs 120. In this way, the clamping legs 120 may be inserted within the sleeve 110, when the fastener is assembled. The slots 116 axially extend down a length of the protective sleeve 110. In the illustrated example, the slots 116 are positioned on opposing sides of the sleeve. Specifically, in the illustrated embodiment, the slots 116 are separated by 180° as measured about the central axis 122. However, in other embodiments, the slots 116 may be non-symmetrically arranged about the central axis. Still further in other examples, the sleeve may include another pair of slots. In such an example, the slots may be sequentially spaced around the central axis by 45° increments. However, other slot arrangements have been envisioned. A slot is defined herein as an opening with a boundary forming a closed shape. The shape in the illustrated example is an elongated slit. However, numerous suitable shapes have been envisioned.

Specifically, in the illustrated example, each of the slots 116 include two sidewalls 218 and two end walls 220 (e.g., an upper and lower end wall). A lower reinforcement section 117 of the sleeve's housing 221 circumferentially surrounds the central axis 122 to form the lower end walls. Thus, the lower reinforcement section 117 bounds the lower side of each of the slots 116. The protective sleeve 110 includes an upper reinforcement section 223 circumferentially surrounding the central axis 122 above the slots 116 thereby forming the upper end walls. In this way, the slots form a closed shape and the structural integrity of the sleeve is increased. To elaborate, the upper reinforcement section 223 and the lower reinforcement section 117 increase the ability of the sleeve to carry shear and bending stresses and strengthen the portion of the sleeve extending there between. It will be understood that the protective sleeve 110 also allows the fastener assembly to be efficiently inserted and removed from workpiece by reducing the friction between the fastener and the workpieces. For example, by providing the sleeve in the fastener the likelihood of the clamping feet and other components in the fastener hanging up during installation and removal is reduced. The protective sleeve also increases the stiffness of the fastener, creating improved alignment in the fastener. Additionally, the diametrical tolerances of the protective sleeve (e.g., one piece protective sleeve) can be held much tighter, if desired, than previous three pieces splitter bar style fasteners and can thus provide improved fastener alignment across numerous usage scenarios.

The two sidewalls 218 in the slots are parallel to one another, in the illustrated example. However, in other examples, at least a portion of the sidewalls may not be parallel. For instance, the sidewalls may taper in a direction extending toward a lower end 224 of the sleeve 110. Additionally or alternatively, the sections of the sidewall may be curved. For instance, one or more of the sidewalls may include concave and/or a convex section(s). Additionally, in the depicted example, the slots have a similar shape and size. However, in other examples, the slots may not have a similar profile.

The protective sleeve 110 includes a flange 234 at an upper end 236. The flange 234 may be fixedly attached to an upper section of the clamping legs 108, in one example. However, in another example, the flange and other portions of the sleeve are not directly attached to the clamping legs 108. Rather, the radial expansion/contraction of the legs may push the sleeve upward/downward when the fastener is transitioned between a clamping configuration and an unclamped configuration. In such an example, the nut cage 200 in the clamping unit 104 may function to axially delimit upward movement of the sleeve 110. The outer diameter 238 of the flange 234 may be larger than an inner diameter 240 of lip 112, shown in FIG. 4. Thus, the flange 234 may be allowed to axial translate in the body but is prevented from falling out of the bottom of the body. The flange 234 may also act as a landing for a spring positioned in the body 102, shown in FIG. 1, as previously discussed. When the flange 234 acts as a landing for the compression spring, the compression spring may be positioned between the nut cage 200 and the flange 234.

The width 230 of the splitter bar 106 is less than a width 242 of the gap 212 between the clamping legs 108 in the upper section 206 of the clamping unit 104. In this way, the splitter bar 106 may be positioned between the legs of the splitter bar. The slots 116 have a length 226 and a width 228. The length 226 runs in direction parallel to the central axis 122 and the width 228 runs in a direction perpendicular to the length. The other lengths of the fastener components are also parallel to the central axis 122.

The length 226 of the slots 116 may be greater than a length 230 of the splitter bar 106. Additionally, the width 228 of the slots 116 may be greater than a width 232 of the splitter bar 106. In this way, the splitter bar 106 may be efficiently mated with the protective sleeve 110 during assembly of the fastener assembly 100. To elaborate, during assembly of the fastener, the clamping unit 104 may be mated with the protective sleeve 110. Subsequently, the splitter bar 106 is slid through the slots 116 in the sleeve 110 and between the clamping legs 108. In this way, the splitter bar may be efficiently assembled with the sleeve and the clamping unit.

The splitter bar 106 includes the "T" shaped extensions 118 at an upper end 244. The upper end 244 may be anchored to the body 250 of the splitter bar 106. In doing so, the sleeve is bound on one end by the nut cage 200, and on the other by the "T" bar of the splitter. In use, the nut cage 200 may be pulled up onto the body and in doing so the fingers are opened by the splitter bar 106. Once the fingers are opened, they will be larger than the other end of the sleeve 110 and while going through a clamping operation will also act to force the sleeve to travel with them as they are pulled into the body. In one example, the sleeve 110 may stay substantially stationary as the end of the slots rests against the "T" while the fingers are opening and then travel with the fingers at the urging of the now expanded clamping feet. However, the flange 234 of the sleeve 110 may be included in the fastener to act as a landing for reacting a spring. In such an example, the compression spring may sit between the nut cage 200 and a proximal end of the sleeve. The spring may be sized to urge the sleeve toward the "T". However, it will be understood that the spring may travel with the sleeve as the expanded clamping feet are now in contact with the other end of the sleeve during the clamping operation and are forcing the sleeve to travel in tandem. In addition, the fastener may be designed such that the flange 234 cooperates with the lip 112 to limit the axial motion in a direction opposite of clamping. However, flange 234 is optionally included in the fastener. The spring can still, in theory, push against the end of the sleeve and the end of the slot can still push against the "T".

The extensions 118 each include two opposing planar surfaces 246, in the illustrated example. Furthermore, each of the extensions 118 radially extend from a central axis 122 of the fastener and correspondingly the bar. To elaborate, the extensions 118 extend at straight angle with regard to one another, in the illustrated example. However, in another example, the extensions 118 may be angularly separated by a non-straight angle. In such an example, the extensions 118 are arranged non-symmetrically about the bar. Further, in other examples, the splitter bar may include three or more extensions. The sleeve may correspondingly include additional slots for the added extensions. In such an example, the second pair of extensions may be separated at straight angle. Therefore, in this example, sequential extensions may be equivalently angularly separated. However, numerous suitable extension arrangements have been envisioned, such as non-equivalent angular arrangements. Additionally, the extensions 118 include planar surface 248 at their lateral sides. Other surface profiles of the lateral sides of the extensions may be used, in other embodiments. It will be understood that the extensions 118 and/or other portions of the splitter bar may be fixedly attached to the body 102, shown in FIG. 1. In this way, the splitter bar is held in a desired orientation and position.

Continuing with FIG. 2, the splitter bar 106 includes a body 250 extending from the extensions 118. The body 250 of the splitter bar 106 includes two opposing planar surfaces 252. In the depicted embodiment, the surfaces 252 extend from the upper end 244 of the bar to the lower end 254 of the bar. However, in other embodiments, at least a portion of the opposing surfaces may have a curved contour (e.g., convex and/or concave profiles) and/or the opposing surfaces may taper in a downward direction 256. A sidewall 258 extends between the opposing surfaces 252. The sidewall 258 is planar, in the illustrated example. However, the sidewall 258 may be curved inward or outward toward the central axis 122, in other examples.

The lower end 254 of the splitter bar 106 includes a curved surface 260, in the illustrated example. The curve surface allows the clamping legs 108 to be smoothly spread apart during fastener actuation. As a result, abrasive wear between the bar and the legs is reduced, thereby increasing fastener longevity. However, a non-curved lower surface of the splitter bar has been contemplated.

FIG. 3 shows the fastener 100 with the splitter bar 106, clamping unit 104, and the protective sleeve 110 in an assembled state. The splitter bar, clamping unit, and protective sleeve are however not positioned in the body 102 to allow structural features obscured by the body to be revealed, in FIG. 3. Nevertheless, it will be understood that the splitter bar, clamping unit, and protective sleeve may be mated with the body when the fastener is assembled. For example, the splitter bar, clamping unit, and protective sleeve may be inserted as a common piece through an opening in the upper end of the body. When placing the splitter bar, clamping unit, and the sleeve in the body, the drive mechanism 140, shown in FIG. 1, may be removed (e.g., unthreaded) from the body.

The clamping unit 104 is an unclamped configuration in FIG. 3. In the unclamped configuration, the clamping legs 108 converge towards one another. Specifically, in the illustrated example, the legs 108 do not radially extend beyond the outer surface 221 of the sleeve 110. In this way, the fastener may be inserted through workpiece apertures prior to clamp-up. Additionally, in the illustrated example, a gap 301 exists between sections of the legs 108 above the sections of the clamping feet 120 contacting one another, in the fastener's unclamped configuration. Consequently, the splitter bar 106 may smoothly push the legs outward when the fastener is transitioned into the clamping configuration. However, other clamping leg arrangements in the unclamped configuration have been contemplated.

FIG. 3 shows the extensions 118 extending radially outward through the slots 116 in the protective sleeve 110. As previously discussed, the extensions may be coupled (e.g., fixedly coupled) or otherwise positioned in a substantially fixed position in the body 102 when the fastener is assembled.

FIG. 3 also depicts the extensions 118 in the splitter bar 106 positioned near an upper end wall 300 of the slots 116. Positioning the upper end 236 of the sleeve 110 near the splitter bar 106 places the clamping unit 104 in the unclamped state. As previously mentioned, in the unclamped state, the clamping feet 120 are in their neutral position, converging toward one another, allowing the fastener to be inserted into the workpieces. Additionally, the lip 112 includes an edge 302 around an opening 304. The edge 302 has a circular shape, in the illustrated example. However, other contours of the lip have been contemplated. FIG. 3 also illustrates the surfaces 248 of the extensions 118 positioned radially beyond the outer surface 221 of the protective sleeve 110.

FIG. 4 shows the splitter bar 106, clamping unit 104, and the protective sleeve 110. However, FIG. 4 again illustrates the aforementioned components outside of the body 102. However, it will be understood that these components may be placed in an interior cavity 400 of the body 102 in an assembled state, as indicated by arrow 401.

In FIG. 4, the clamping unit 104 is in the clamping configuration where the splitter bar 106 is moved between the clamping feet 120 to radially shift the feet outward into a clamping configuration. Specifically, the lower end 254 of the splitter bar 106 is positioned axially below the clamping legs. However, it will be understood that when the lower end 254 of the splitter bar 106 reaches the bottom surfaces 402 of the clamping feet 120, the fastener is in a clamped configuration. In the clamping position, the lower sections 208 of the clamping legs 108 bend outward and have a planar shape. However, other clamping leg profiles, in the clamping position, have been contemplated. Additionally, the clamping surfaces 128 in the clamping feet 120 are radially aligned in the clamping configuration, in the illustrated example. However, in other examples, the clamping surface 128 may not be parallel to a radial plane, in the clamping configuration. Furthermore, it will be understood that the outer edge 406 of the clamping feet 120 are positioned radially beyond the diameter of the outer surface 221 of the protective sleeve 110.

Additionally, when the fastener is transitioned into the clamping configuration, the position of the slots 116 in the sleeve 110 with regard to the extensions 118 in the splitter bar 106 shift. Specifically, the extensions 118 are positioned closer to a lower end wall 404 of the slots 116. It will be understood, that the protective sleeve 110 may travel upwards when the clamping unit travels upward. Upward protective sleeve movement during clamping may be achieved through an interaction between the clamping legs and the sleeve that urges the sleeve axially upward. However, other suitable mechanisms for axially translating the sleeve and clamping unit in tandem during fastener clamping and/or unclamping have been contemplated.

FIG. 5 shows an assembled view of the fastener assembly 100. As depicted, the clamping unit 104 and protective sleeve 110 are correspondingly drawn upwards into the body 102 while the splitter bar 106 position remains substantially stationary when the fastener is transitioned into the clamping configuration from the unclamped configuration. As such, the splitter bar 106 is positioned between the clamping feet 120 to radially expand the feet and place the clamping surfaces 128 in the feet in a clamping position. Specifically, in the clamping position the outer edge 406 of the feet are again shown extending radially beyond the outer surface 221 of the sleeve 110. The face 134 of the body 102 acting as an upper clamping surface, is also shown in FIG. 5.

The protective sleeve 110 partially circumferentially encloses a portion of the clamping legs 108, guarding the clamping legs and splitter bar against abrasive wear during workpiece insertion/removal and reducing the amount of external loads (e.g., shear loads) transferred to the clamping legs during workpiece clamping. Furthermore, as previously discussed the sleeve 110 may also aid in fastener alignment during insertion and removal as well as allow shear and bending stresses to be decoupled from the clamping legs, if desired. In this way, the likelihood of fastener degradation during clamping/unclamping action is reduced and the fastener is significantly strengthened.

FIG. 6 shows the fastener 100 in another clamping configuration where fastener's grip length is reduced. As shown, at enlarged view 600, the sleeve 110 travels further into the body 102 and the clamping feet 120 are therefore drawn closer to the face 134 of the body 102. FIG. 6 also shows a stud 600 that may be included in the drive mechanism 144, illustrated in FIG. 1.

FIG. 7 shows a portion of the fastener 100 with the optional spring 201 adjacent to the upper end 236 of the sleeve 110. As previously discussed, the flange 234 or other section of the sleeve 110 may act as a landing for the spring 201. As such, the compression spring may sit between the nut cage 200 and the outer diameter 238 of the flange 234, shown in FIG. 2, and may be sized to urge the protective sleeve 110 towards the "T" shaped extensions 118 of the splitter bar 106. It will be appreciated that the opening 113 in the body 102, shown in FIG. 1, may be sized to allow free travel of the sleeve but may be smaller in diameter than the flange 234. As such, the spring force may hold the flange against the back-side of the opening in the body, extending (e.g., maximally extending) the sleeve axially away from the body. It will also be understood that, in one example, the spring force may be overcome by retracting the clamping feet but not necessarily during fastener insertion into a group of parts slated for clamping.

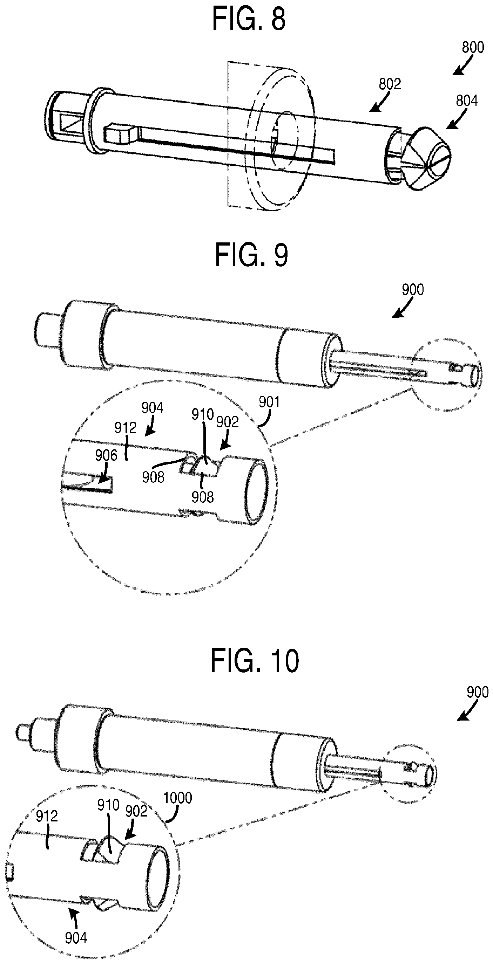

In yet another embodiment shown in FIG. 8, a fastener 800 with a sleeve 802 may be fixedly coupled (e.g., fused) to clamping feet 804. The fastener 800 shown in FIG. 8 may several components, features, etc. included in the fastener 100, shown in FIGS. 1-7. Therefore, redundant description is omitted for brevity. In the fastener embodiment shown in FIG. 8, the sleeve may be sized so that it sits close to the end of the clamping feet but does not interfere with opening/closing of the feet. As such, the sleeve may be positioned to provide a larger amount of leg protection, load decoupling, etc., during use at various axial displacements. It will be appreciated that in the embodiment of the fastener 800 shown in FIG. 8 the spring may be omitted from the assembly.

FIGS. 9-10 illustrate another embodiment of a fastener 900. The fastener 900 shown in FIGS. 9-10 includes several components, features, etc. included in the fastener 100, shown in FIGS. 1-7. Therefore, redundant description is omitted for brevity.

Turning to FIG. 9, illustrating the fastener 900 in an unclamped configuration. Enlarged view 901 shows openings 902 (e.g., windows) in a sleeve 904 arranged below slits 906. The openings extend through the sleeve into an interior cavity. The openings 904 include walls 908 bounding clamping feet 910. To elaborate, the walls extend above and below the clamping feet as well as down the sides of the feet. As such, the openings 902 serve to protect the clamping feet from abrasive wear, hanging up, etc., during fastener insertion and removal.

The feet 910 are retracted in FIG. 9 and may not extend beyond an outer surface 912 of the sleeve. However, in FIG. 10 the fastener 900 is arranged in a clamping configuration. In the clamping configuration, the feet 910 are pushed outward and extend radially outward from the outer surface 912 of the sleeve 904, indicated at enlarged view 1000. It will be understood, that the openings 902 in the sleeve 904 allows additional loads (e.g., shear and bending loads) to be decoupled from the clamping feet and correspondingly the clamping legs. Consequently, the loads experienced by the fastener during use are transferred to a stronger component (i.e., the sleeve) more apt to react the loads, reducing the chance of fastener degradation.

FIGS. 1-10 show example configurations with relative positioning of the various components. If shown directly contacting each other, or directly coupled, then such elements may be referred to as directly contacting or directly coupled, respectively, at least in one example. Similarly, elements shown contiguous or adjacent to one another may be contiguous or adjacent to each other, respectively, at least in one example. As an example, components laying in face-sharing contact with each other may be referred to as in face-sharing contact. As another example, elements positioned apart from each other with only a space there-between and no other components may be referred to as such, in at least one example. As yet another example, elements shown above/below one another, at opposite sides to one another, or to the left/right of one another may be referred to as such, relative to one another. Further, as shown in the figures, a topmost element or point of element may be referred to as a "top" of the component and a bottommost element or point of the element may be referred to as a "bottom" of the component, in at least one example. As used herein, top/bottom, upper/lower, above/below, may be relative to a vertical axis of the figures and used to describe positioning of elements of the figures relative to one another. As such, elements shown above other elements are positioned vertically above the other elements, in one example. As yet another example, shapes of the elements depicted within the figures may be referred to as having those shapes (e.g., such as being circular, straight, planar, curved, rounded, chamfered, angled, or the like). Further, elements shown intersecting one another may be referred to as intersecting elements or intersecting one another, in at least one example. Further still, an element shown within another element or shown outside of another element may be referred as such, in one example.

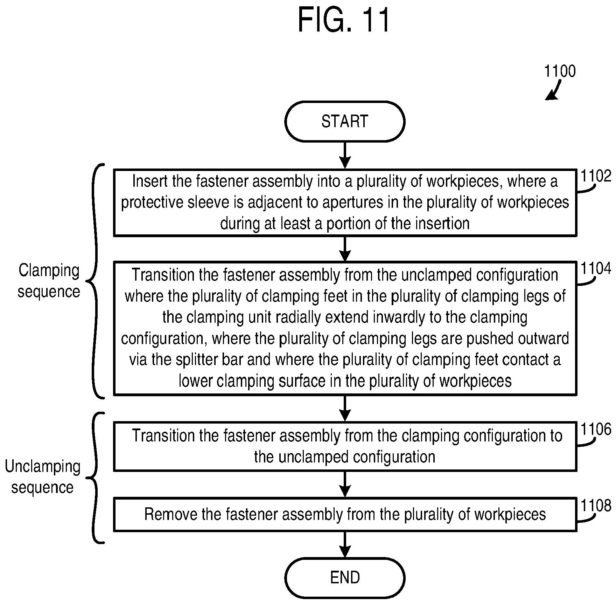

FIG. 11 shows a method 1100 for operating a fastener assembly. The method 1100 may be implemented by any of the fastener assemblies or combinations of the fastener assemblies as well as tooling apparatuses described above with regard to FIGS. 1-10. However, in other examples, the method 1100 may be implemented by other suitable fastener assemblies and/or tooling apparatuses. It will be appreciated that the method 1100 may be at least implemented in part via an automated process. As such, the instructions for the method steps may be stored in non-transitory memory that when executed by the processor cause the controller to implement the method steps. It will be understood that the memory and processor may be included in hardware in tooling apparatuses. However, at least some of the steps, in some examples, may be implemented via manufacturing personnel manually operating tooling apparatuses.

At 1102, the method includes inserting the fastener assembly into a plurality of workpieces. It will be appreciated that the protective sleeve is adjacent to apertures in the plurality of workpieces during at least a portion of the insertion. In this way, the clamping legs and the splitter bar are protected from abrasive wear during fastener insertion/removal. As previously discussed, the protective sleeve may include a flange axially delimited by a nut cage of the clamping unit. In such an example, the lip in the body of the fastener axially retains the sleeve and the clamping unit. Consequently, the sleeve may be retained in the body of the fastener.

At 1104, the method includes transitioning the fastener assembly from the unclamped configuration where the plurality of clamping feet in the plurality of clamping legs of the clamping unit radially extend inward to the clamping configuration where the plurality of clamping legs are pushed outward via the splitter bar and where the plurality of clamping feet contact the lower clamping surface in the plurality of workpieces. In one specific example, during the transition between the unclamped configuration and the clamped configuration, the protective sleeve axially translates towards an upper end of the fastener assembly when the clamping unit axially translates towards the upper end of the fastener assembly.

At 1106, the method includes transitioning the fastener assembly from the clamping configuration to the unclamped configuration. To elaborate, the clamping unit is axially translated in a downward direction moving the radially converging region of the clamping legs away from the splitter bar. Consequently, the clamping legs are allowed to return to their neutral state in which they are bent inwardly. When the clamping legs converge in this manner, the clamping feet in the legs disengage from an outer surface of the workpiece.

Next at 1108 the method includes removing the fastener assembly from the plurality of workpieces. In this way, the fastener assembly is efficiently transitioned between the clamping and unclamping states. It will be understood that steps 1102-1104 occur during a clamping sequence and steps 1106-1108 occur during an unclamping sequence.

The technical effect of providing a fastener assembly with a protective sleeve at least partially circumferentially surrounding a clamping unit and a splitter bar is to increase fastener longevity and durability by protecting the clamping unit from abrasive wear during tooling as well as offloading some shear stresses experienced during workpiece clamping from the clamping unit to the sleeve.

The invention will further be described in the following paragraphs. In one aspect, a fastener assembly is provided that comprises a clamping unit including two clamping legs each having a shank and a clamping foot extending therefrom; a splitter bar including two extensions and a shaft extending between the two clamping legs and radially expanding and retracting the clamping feet responsive to axially translation of the clamping unit; and a protective sleeve partially circumferentially surrounding at least a portion of the clamping leg shanks and the splitter bar, the protective sleeve comprising two slots having the two extensions extending there through.

In another aspect, a method for operating a fastener assembly is provided that comprises inserting the fastener assembly into a plurality of workpieces, where a protective sleeve is adjacent to apertures in the plurality of workpieces during at least a portion of the insertion; and
transitioning the fastener assembly from an unclamped configuration where a plurality of clamping feet in a plurality of clamping legs of a clamping unit radially extend inwardly to a clamping configuration where the plurality of clamping legs are pushed outward via a splitter bar and where the plurality of clamping feet contact a lower clamping surface in the plurality of workpieces; where the protective sleeve at least partially encloses the splitter bar and the clamping unit and includes two slots having two extensions in the splitter bar extending there through. In one example, the method may further comprise transitioning the fastener assembly from the clamping configuration to the unclamped configuration and removing the fastener assembly from the plurality of workpieces.

In yet another aspect, a removable fastener assembly is provided that comprises a clamping unit including two clamping legs each having a shank and a clamping foot extending therefrom; a splitter bar including two extensions and a shaft extending between the two clamping legs and radially expanding and retracting the clamping feet responsive to axially translation of the clamping unit; a protective sleeve partially circumferentially surrounding at least a portion of the clamping leg shanks and the splitter bar; where the protective sleeve comprises two slots having the two extensions extending there through; and a body including an upper clamping surface and at least partially enclosing the clamping unit, the splitter bar, and the protective sleeve, where the clamping feet each include a lower clamping surface.

In any of the aspects or combinations of the aspects, the protective sleeve may include a first reinforcement section forming an upper end wall of each of the two slots and a second reinforcement section forming a lower end wall of each of the two slots.

In any of the aspects or combinations of the aspects, the protective sleeve may include a reinforcement section extending across an upper or lower end of each of the two slots.

In any of the aspects or combinations of the aspects, the fastener assembly may further comprise a body including an upper clamping surface and at least partially enclosing the clamping unit, the splitter bar, and the protective sleeve, where the clamping feet each include a lower clamping surface.

In any of the aspects or combinations of the aspects, the body may include a lip axially retaining portions of the protective sleeve, the splitter bar, and the clamping unit in an interior cavity of the body.

In any of the aspects or combinations of the aspects, an axial length of the splitter bar may be less than an axial length of the two slots of the protective sleeve.

In any of the aspects or combinations of the aspects, the protective sleeve may include a flange radially extending from an upper end of the protective sleeve.

In any of the aspects or combinations of the aspects, the flange may be designed to contact a spring positioned in the body.

In any of the aspects or combinations of the aspects, a nut cage of the clamping unit may axially interact with a drive mechanism coupled to an upper end of the body during fastener clamping and unclamping.

In any of the aspects or combinations of the aspects, in a clamping configuration the splitter bar may extend between the clamping feet and may radially expand the clamping feet; and where in an unclamped configuration a lower end of the splitter bar may be axially offset from the clamping feet.

In any of the aspects or combinations of the aspects, in the clamping configuration, clamping surfaces in the clamping feet may be in contact with a workpiece and extend radially beyond an outer surface of the protective sleeve.

In any of the aspects or combinations of the aspects, in the unclamped configuration, the clamping feet may contact one another.

In any of the aspects or combinations of the aspects, the fastener assembly may further comprise a drive mechanism including a stud threading into a section of a body.

In any of the aspects or combinations of the aspects, during the transition between the unclamped configuration and the clamped configuration, the protective sleeve may axially translate towards an upper end of the fastener assembly when the clamping unit axially translates towards the upper end of the fastener assembly.

In any of the aspects or combinations of the aspects, during the transition between the unclamped configuration and the clamped configuration, the slots may axial translate with regard to the two extensions in the splitter bar.

In any of the aspects or combinations of the aspects, an axial length of the splitter bar may be less than an axial length of the two slots of the protective sleeve.

In any of the aspects or combinations of the aspects, the body may include a lip axially retaining portions of the protective sleeve, the splitter bar, and the clamping unit in an interior cavity of the body.

In any of the aspects or combinations of the aspects, the leg shanks may extend radially inward with regard to a central axis of the removable fastener assembly in the unclamped configuration and where in the unclamped configuration the clamping feet do not extend radially beyond an outer surface of the protective sleeve.

In another representation, a removable fastener is provided that includes a body housing an assembly including a protective sleeve, clamping unit, and splitter bar, where the protective sleeve at least partially circumferentially surrounds a portion of the clamping unit and the splitter bar and where the protective sleeve and the clamping unit axial translate upward and downward during transition between a clamping configuration and an unclamping configuration while the splitter bar remains substantially stationary.

Note that the example control and estimation routines included herein can be used with various fastener assembly configurations. The control methods and routines disclosed herein may be stored as executable instructions in non-transitory memory and may be carried out by a tooling apparatus.

The specific routines described herein may represent one or more of any number of processing strategies such as event-driven, interrupt-driven, multi-tasking, multi-threading, and the like. As such, various actions, operations, and/or functions illustrated may be performed in the sequence illustrated, in parallel, or in some cases omitted. Likewise, the order of processing is not necessarily required to achieve the features and advantages of the example embodiments described herein, but is provided for ease of illustration and description. One or more of the illustrated actions, operations and/or functions may be repeatedly performed depending on the particular strategy being used. Further, the described actions, operations and/or functions may graphically represent code to be programmed into non-transitory memory of the computer readable storage medium in the fastener assembly and/or tooling apparatus, where the described actions are carried out by executing the instructions in a tooling apparatus and fastener assembly including the various components.

It will be appreciated that the configurations and routines disclosed herein are exemplary in nature, and that these specific embodiments are not to be considered in a limiting sense, because numerous variations are possible. For example, the above technology can be applied to a broad range of manufacturing fields such as the aerospace industry, the construction industry, the maritime industry, the automotive industry, industrial manufacturing, etc. The subject matter of the present disclosure includes all novel and non-obvious combinations and sub-combinations of the various systems and configurations, and other features, functions, and/or properties disclosed herein.

As used herein, the terms "approximately" and "substantially" are construed to mean plus or minus five percent of the range unless otherwise specified.

## Claims

1. A fastener assembly (100) comprising:
a clamping unit (104) including two clamping legs (108) each having a shank (202) and a clamping foot (120) extending therefrom;
a splitter bar (106) including two extensions (118) and a shaft extending between the two clamping legs (108) and radially expanding and retracting the clamping feet (120) responsive to axially translation of the clamping unit (104); **characterised by**
a protective sleeve (110) partially circumferentially surrounding at least a portion of the clamping leg shanks and the splitter bar (106), the protective sleeve (110) comprising two slots (116) having the two extensions (118) extending there through.

2. The fastener assembly (100) of claim 1, where the protective sleeve (110) includes a first reinforcement section (223) forming an upper end wall of each of the two slots (116) and a second reinforcement section (117) forming a lower end wall of each of the two slots (116).

3. The fastener assembly (100) of any of the preceding claims, further comprising a body (102) including an upper clamping surface and at least partially enclosing the clamping unit (104), the splitter bar (106), and the protective sleeve (110), where the clamping feet (120) each include a lower clamping surface.

4. The fastener assembly (100) of claim 3, where the body (102) includes a lip (112) axially retaining portions of the protective sleeve (110), the splitter bar (106), and the clamping unit (104) in an interior cavity of the body (102).

5. The fastener assembly (100) of claim 1, where an axial length of the splitter bar (106) is less than an axial length of the two slots (116) of the protective sleeve (110).

6. The fastener assembly (100) of any of the preceding claims, where the protective sleeve (110) includes a flange (234) radially extending from an upper end of the protective sleeve (110).

7. The fastener assembly (100) of claim 6, where the flange (234) is designed to contact a spring (201) positioned in the body (102).

8. The fastener assembly (100) of any of the proceeding claims, where a nut cage (200) of the clamping unit (104) axially interacts with a drive mechanism (140, 144) coupled to an upper end of the body (102) during fastener clamping and unclamping.

9. The fastener assembly (100) of any of the proceeding claims, where in a clamping configuration the splitter bar (106) extends between the clamping feet (120) and radially expands the clamping feet (120); and
where in an unclamped configuration a lower end of the splitter bar (106) is axially offset from the clamping feet (120).

10. The fastener assembly (100) of claim 9, where in the clamping configuration, clamping surfaces in the clamping feet (120) are in contact with a workpiece and extend radially beyond an outer surface of the protective sleeve (110).

11. The fastener assembly (100) of any of claims 9 to 10, where the two slots (116) in the protective sleeve (110) are positioned on opposing sides of the protective sleeve (110).

12. A removable fastener assembly comprising:
a fastener assembly (100) according to one of claims 3 to 11, where the leg shanks extend radially inward with regard to a central axis of the removable fastener assembly in the unclamped configuration and where in the unclamped configuration the clamping feet (120) do not extend radially beyond an outer surface of the protective sleeve (110).

13. A method for operating a fastener assembly comprising:
inserting the fastener assembly into a plurality of workpieces, where a protective sleeve is adjacent to apertures in the plurality of workpieces during at least a portion of the insertion; and
transitioning the fastener assembly from an unclamped configuration where a plurality of clamping feet in a plurality of clamping legs of a clamping unit radially extend inwardly to a clamping configuration where the plurality of clamping legs are pushed outward via a splitter bar and where the plurality of clamping feet contact a lower clamping surface in the plurality of workpieces;
where the protective sleeve at least partially encloses the splitter bar and the clamping unit and includes two slots having two extensions in the splitter bar extending there through.

14. The method of claim 13, further comprising transitioning the fastener assembly from the clamping configuration to the unclamped configuration and removing the fastener assembly from the plurality of workpieces.

15. The method of any of claims 13 or 14, where during the transition between the unclamped configuration and the clamped configuration, the protective sleeve axially translates towards an upper end of the fastener assembly when the clamping unit axially translates towards the upper end of the fastener assembly and/ or the slots axial translates with regard to the two extensions in the splitter bar.

## Patentansprüche

1. Befestigungsanordnung (100), aufweisend:
eine Klemmeinheit (104) mit zwei Klemmschenkeln (108), die jeweils einen Schaft (202) und einen sich davon weg erstreckenden Klemmfuß (120) haben;
einen Spaltkeilstab (106) mit zwei Fortsätzen (118) und einem Schaft, der sich zwischen den zwei Klemmschenkeln (108) erstreckt und im Ansprechen auf eine axiale Translation der Klemmeinheit (104) die Klemmfüße (120) radial ausfährt und einzieht; **gekennzeichnet durch**
eine Schutzhülse (110), die zumindest einen Teil der Klemmschenkelschäfte und des Spaltkeilstabs (106) teilweise umfänglich umgibt, wobei die Schutzhülse (110) zwei Schlitze (116) aufweist, durch die sich die zwei Fortsätze (118) hindurch erstrecken.

2. Befestigungsanordnung (100) nach Anspruch 1, wobei die Schutzhülse (110) einen ersten Verstärkungsabschnitt (223), der eine obere Endwand von jedem der zwei Schlitze (116) bildet, und einen zweiten Verstärkungsabschnitt (117) umfasst, der eine untere Endwand von jedem der zwei Schlitze (116) bildet.

3. Befestigungsanordnung (100) nach einem der vorhergehenden Ansprüche, darüber hinaus mit einem Hauptteil (102), der eine obere Klemmfläche umfasst und die Klemmeinheit (104), den Spaltkeilstab (106) und die Schutzhülse (110) zumindest teilweise umschließt, wobei die Klemmfüße (120) jeweils eine untere Klemmfläche umfassen.

4. Befestigungsanordnung (100) nach Anspruch 3, wobei der Hauptteil (102) eine Lippe (112) umfasst, die Teile der Schutzhülse (110), des Spaltkeilstabs (106) und der Klemmeinheit (104) in einem Innenhohlraum des Hauptteils (102) axial einschließt.

5. Befestigungsanordnung (100) nach Anspruch 1, wobei eine axiale Länge des Spaltkeilstabs (106) kleiner ist als eine axial Länge der zwei Schlitze (116) der Schutzhülse (110).

6. Befestigungsanordnung (100) nach einem der vorhergehenden Ansprüche, wobei die Schutzhülse (110) einen Flansch (234) umfasst, der sich radial von einem oberen Ende der Schutzhülse (110) weg erstreckt.

7. Befestigungsanordnung (100) nach Anspruch 6, wobei der Flansch (234) dafür ausgelegt ist, eine Feder (201) zu berühren, die im Hauptteil (102) angeordnet ist.

8. Befestigungsanordnung (100) nach einem der vorhergehenden Ansprüche, wobei ein Mutternkäfig (200) der Klemmeinheit (104) während des Klemmens und Lösens des Befestigungselements axial mit einem Antriebsmechanismus (140, 144) zusammenwirkt, der mit einem oberen Ende des Hauptteils (102) gekoppelt ist.

9. Befestigungsanordnung (100) nach einem der vorhergehenden Ansprüche, wobei sich in einer Klemmkonfiguration der Spaltkeilstab (106) zwischen den Klemmfüßen (120) erstreckt und die Klemmfüße (120) radial ausfährt; und
wobei in einer Nicht-Klemmkonfiguration ein unteres Ende des Spaltkeilstabs (106) zu den Klemmfüßen (120) axial versetzt ist.

10. Befestigungsanordnung (100) nach Anspruch 9, wobei in der Klemmkonfiguration Klemmflächen an den Klemmfüßen (120) in Kontakt mit einem Werkstück sind und sich radial über eine Außenfläche der Schutzhülse (110) hinaus erstrecken.

11. Befestigungsanordnung (100) nach einem der Ansprüche 9 bis 10, wobei die zwei Schlitze (116) in der Schutzhülse (110) auf gegenüberliegenden Seiten der Schutzhülse (110) angeordnet sind.

12. Entfernbare Befestigungsanordnung, aufweisend:
eine Befestigungsanordnung (100) nach einem der Ansprüche 3 bis 11, wobei in der Nicht-Klemmkonfiguration die Schenkelschäfte sich bezüglich einer Längsachse der entfernbaren Befestigungsanordnung radial nach innen erstrecken und in der Nicht-Klemmkonfiguration die Klemmfüße (120) sich nicht radial über eine Außenfläche der Schutzhülse (110) hinaus erstrecken.

13. Verfahren zum Betätigen einer Befestigungsanordnung, umfassend:
Einführen der Befestigungsanordnung in mehrere Werkstücke, wobei zumindest während eines Teils des Einführvorgangs eine Schutzhülse an Öffnungen in den mehreren Werkstücken angrenzt; und
die Befestigungsanordnung von einer Nicht-Klemmkonfiguration, in der mehrere Klemmfüße an mehreren Klemmschenkeln einer Klemmeinheit sich radial nach innen erstrecken, zu einer Klemmkonfiguration übergehen zu lassen, in der die mehreren Klemmschenkel über einen Spaltkeilstab nach außen gedrückt werden, und in der die mehreren Klemmfüße eine untere Klemmfläche an den mehreren Werkstücken berühren;
wobei die Schutzhülse den Spaltkeilstab und die Klemmeinheit zumindest teilweise umschließt und zwei Schlitze umfasst, durch die sich zwei Fortsätze am Spaltkeilstab hindurch erstrecken.

14. Verfahren nach Anspruch 13, darüber hinaus umfassend, die Befestigungsanordnung von der Klemmkonfiguration zur Nicht-Klemmkonfiguration übergehen zu lassen und die Befestigungsanordnung aus den mehreren Werkstücken zu entfernen.

15. Verfahren nach einem der Ansprüche 13 oder 14, wobei während des Übergangs zwischen der Nicht-Klemmkonfiguration und der Klemmkonfiguration die Schutzhülse axial zu einem oberen Ende der Befestigungsanordnung hin verschoben wird, wenn die Klemmeinheit axial zum oberen Ende der Befestigungsanordnung hin verschoben wird und/oder die Schlitze in Bezug auf die zwei Fortsätze am Spaltkeilstab axial verschoben werden.

## Revendications

1. Ensemble élément de fixation (100) comprenant :
une unité de serrage (104) comprenant deux pattes de serrage (108) ayant chacune une tige (202) et un pied de serrage (120) s'étendant hors de celle-ci ;
une barre de division (106) comprenant deux extensions (118) et un arbre s'étendant entre les deux pattes de serrage (108) et dilatant et rétractant dans le plan radial les pieds de serrage (120) en réponse à la translation axiale de l'unité de serrage (104) ;
**caractérisé par** :
un manchon protecteur (110) entourant en partie dans le plan circonférentiel au moins une partie des tiges de la patte de serrage et la barre de division (106), le manchon protecteur(110) comprenant deux fentes (116) dont les deux extensions (118) s'étendent de façon traversante.

2. Ensemble élément de fixation (100) selon la revendication 1, dans lequel le manchon protecteur (110) comprend une première section de renforcement (223) formant une paroi d'extrémité supérieure de chacune des deux fentes (116) et une seconde section de renforcement (117) formant une paroi d'extrémité inférieure de chacune des deux fentes (116).

3. Ensemble élément de fixation (100) selon l'une quelconque des revendications précédentes, comprenant en outre un corps (102) comprenant une surface de serrage supérieure et entourant au moins en partie l'unité de serrage (104), la barre de division (106) et le manchon protecteur (110), dans lequel les pieds de serrage (120) comprennent chacun une surface de serrage inférieure.

4. Ensemble élément de fixation (100) selon la revendication 3, dans lequel le corps (102) comprend une lèvre (112) retenant dans le plan axial des parties du manchon protecteur (110), la barre de division (106) et l'unité de serrage (104) dans une cavité intérieure du corps (102).

5. Ensemble élément de fixation (100) selon la revendication 1, dans lequel une longueur axiale de la barre de division (106) est inférieure à une longueur axiale des deux fentes (116) du manchon protecteur (110).

6. Ensemble élément de fixation (100) selon l'une quelconque des revendications précédentes, dans lequel le manchon protecteur (110) comprend une bride (234) s'étendant dans le plan radial hors d'une extrémité supérieure du manchon protecteur (110).

7. Ensemble élément de fixation (100) selon la revendication 6, dans lequel la bride (234) est conçue pour entrer au contact d'un ressort (201) positionné dans le corps (102).

8. Ensemble élément de fixation (100) selon l'une quelconque des revendications précédentes, dans lequel une cage d'écrou (200) de l'unité de serrage (104) interagit dans le plan axial avec un mécanisme d'entraînement (140, 144) couplé à une extrémité supérieure du corps (102) pendant le serrage et le desserrage de l'élément de fixation.

9. Ensemble élément de fixation (100) selon l'une quelconque des revendications précédentes, dans lequel dans une configuration de serrage, la barre de division (106) s'étend entre les pieds de serrage (120) et dilate dans le plan radial les pieds de serrage (120) ; et dans lequel dans une configuration desserrée, une extrémité inférieure de la barre de division (106) est décalée dans le plan axial par rapport aux pieds de serrage (120).

10. Ensemble élément de fixation (100) selon la revendication 9, dans lequel dans la configuration de serrage, les surfaces de serrage prévues dans les pieds de serrage (120) sont en contact avec une pièce usinée et s'étendent dans le plan radial au-delà d'une surface extérieure du manchon protecteur (110).

11. Ensemble élément de fixation (100) selon l'une quelconque des revendications 9 à 10, dans lequel les deux fentes (116) prévues dans le manchon protecteur (110) sont positionnées sur les côtés opposés du manchon protecteur (110).

12. Ensemble élément de fixation amovible comprenant :
un ensemble élément de fixation (100) selon l'une quelconque des revendications 3 à 11, dans lequel les tiges de patte s'étendent vers l'intérieur dans le plan radial par rapport à un axe central de l'ensemble élément de fixation amovible dans la configuration desserrée et dans lequel dans la configuration desserrée, les pieds de serrage (120) ne s'étendent pas dans le plan radial au-delà d'une surface extérieure du manchon protecteur (110).

13. Procédé d'actionnement d'un ensemble élément de fixation comprenant :
l'insertion de l'ensemble élément de fixation dans une pluralité de pièces usinées, dans lequel un manchon protecteur est adjacent aux ouvertures prévues dans la pluralité de pièces usinées pendant au moins une partie de l'insertion ; et
la transition de l'ensemble élément de fixation d'une configuration desserrée dans laquelle une pluralité de pieds de serrage prévus dans une pluralité de pattes de serrage d'une unité de serrage s'étendent vers l'intérieur dans le plan radial jusqu'à une configuration de serrage dans laquelle la pluralité de pattes de serrage sont poussées vers l'extérieur via une barre de division et dans laquelle la pluralité de pieds de serrage entrent au contact d'une surface de serrage inférieure dans la pluralité de pièces usinées ; dans lequel le manchon protecteur entoure au moins en partie la barre de division et l'unité de serrage et comprend deux fentes ayant deux extensions prévues dans la barre de division s'étendant de façon traversante.

14. Procédé selon la revendication 13, comprenant en outre la transition entre l'ensemble élément de fixation passant de la configuration de serrage à la configuration desserrée et le retrait de l'ensemble élément de fixation hors de la pluralité de pièces usinées.

15. Procédé selon l'une quelconque des revendications 13 ou 14, dans lequel pendant la transition entre la configuration desserrée et la configuration serrée, le manchon protecteur effectue un mouvement de translation axial en direction d'une extrémité supérieure de l'ensemble élément de fixation lorsque l'unité de serrage effectue un mouvement de translation axial en direction de l'extrémité supérieure de l'ensemble élément de fixation et/ou que les fentes effectuent un mouvement de translation axial par rapport aux deux extensions prévues dans la barre de division.
